# EUROPEAN PATENT APPLICATION

(11) **EP 1 060 951 A2**
(43) Date of publication of application: **20.12.2000**
(21) Application number: 00112125.0
(22) Date of filing: 06.06.2000
(51) Int. Cl.: B60Q 1/46, B60Q 1/52

(54) **Warning device for vehicle**

(30) Priority: 18.06.1999 GB 9914145
(71) Applicant: Bayerische Motoren Werke Aktiengesellschaft, 80809 München (DE)
(72) Inventor: Mahler, Robert, 85375 Neufahrn bei Freising (DE)

(57) **Abstract**

A vehicle 10 is disclosed which includes a warning system which is suitable for indicating to following traffic the opening of a closure member 20, 26. A control means 30 emits a visible warning signal rearwards of the vehicle 10 by turning on one or more lamps 322, 324, 326, 328, 342, 344, 346, 348 which are included in the rear lamp clusters 32, 34 of the vehicle 10. The warning signal can be implemented, for example, by flashing a pair of the rear lamps 322, 342; 324, 344; 326, 346; 328, 348 in unison or alternately/out of phase. In this manner, an effective warning is provided without the risk of the warning signal being obscured by a user getting into or out of the vehicle 10.

## Description

This invention relates to vehicles and in particular to a vehicle which includes a warning system suitable for alerting following traffic to the opening of one or more of its closure members, such as a door, boot-lid or tailgate.

It is known to provide a vehicle with a system to warn following or passing traffic that a door of the vehicle has been opened so that, for example, this traffic can tell that a user may be about to get into or out of the vehicle and/or that the effective width of the vehicle has increased. Such systems are particularly useful during darkness or under conditions of reduced visibility, such as in fog.

In order to provide this kind of warning system, it is known to fit rear facing warning lamps to the doors of a vehicle. These warning lamps are activated by door-operated contact breakers. The provision of this feature adds cost to the manufacture of the vehicle and is often only provided on upper-range models. One system which embodies this principle is disclosed in US 5,193,895 and comprises a rear-facing lighting array which is fitted to a door of a vehicle.

In mid-range vehicles, it is not always economically viable to provide an illuminated rear warning. A compromise is sometimes reached by which rear-facing reflectors are fitted, thereby reducing the cost at least to the extent that there is no longer any need to provide electrical power, contact breakers or an expensive lamp assembly. In many lower-range models, however, no warning system whatsoever is provided.

There are several disadvantages associated with various aspects of the prior art arrangements discussed above, whether they are door-mounted rear-facing warning lamps or reflectors. There is, of course, the cost to the manufacturer which is often subsequently passed on to the customer. Somewhat more worrying, however, is the possibility that the warning lamp/reflector may be obscured by a user entering or leaving the vehicle.

In addition, warning lamps/reflectors have no effect until the door has actually been opened. This means that approaching traffic cannot tell that the door is about to be opened and has no opportunity to increase its passing distance. The result may be that passing traffic is too close to take avoiding action when a door is actually opened and the effective width of the vehicle increased.

It is an object of this invention to provide an improved vehicle.

Accordingly, the invention provides a vehicle including a warning means which is suitable for indicating to following traffic the opening of a closure member of the vehicle, the warning means being arranged on activation to emit a visible warning signal substantially rearwards of the vehicle, wherein said warning signal includes the illumination of one or more rear lamps of the vehicle.

Said warning signal may include the flashing of at least a first said rear lamp. At least one further rear lamp may be flashed simultaneously with said first rear lamp or may be flashed out of phase with said first rear lamp.

The warning signal may be activated: before a said closure member is opened; in response to the vehicle being unlocked; in response to a communication between the vehicle and a portable transponder; in response to a rear closure member unlatch signal; by turning off a vehicle power switch; or in response to the vehicle being locked.

The warning means may be arranged such that said warning signal is only activated on turning off said power switch if a said closure member is subsequently opened.

Said warning may signal remain activated for the duration of a predetermined time-out.

Said warning signal may be over-ruled or cancelled by the use of a regular lighting switch to control said one or more rear lamps.

Said warning means may be arranged to receive a signal from an ambient light transducer and the warning signal may then be activated only under conditions of darkness or reduced visibility.

Said warning means may be arranged to receive a signal from a vehicle speed transducer and said warning signal may then be activated only if the vehicle is substantially at rest.

The invention will now be described by way of example only and with reference to the accompanying drawing, in which:

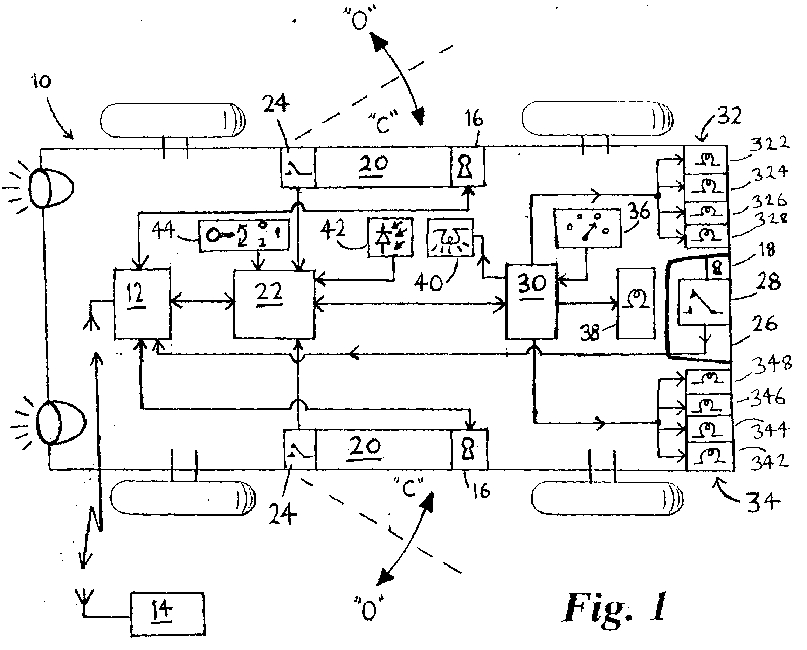

Figure 1 is a schematic diagram of a vehicle according to the invention.

Referring to the figure, a vehicle 10 includes a security controller 12 which communicates with a passive entry and starting device in the form of a card-key/smart card portable transponder 14.

The security controller 12 acts as a central door locking unit (CDL) for controlling the operation of the vehicle's closure member latching mechanisms in the form of door latches 16 and a boot-lid latch 18. When the door latches 16 are unlocked, a user can move a door 20 between an open position "O" and a closed position "C". The boot-latch 18 can be unlatched using either the security controller 12 or a mechanical key (not shown) which co-operates with the transponder 14.

Opening and closing of the doors 20 is detected by a body control module (BCM) 22 using associated "door-open" circuit breakers 24 and opening of a boot-lid 26 is detected by the BCM 22 in similar fashion using a "boot-lid-open" circuit breaker 28.

The vehicle 10 further comprises a lighting controller 30 which controls the operation of a right-hand rear lamp cluster 32 and a left-hand rear lamp cluster 34. The rear lamp clusters 32, 34 include respective right- and left-hand; tail lamps 322, 342, indicator/flasher lamps 324, 344, fog lamps 326, 346 and reversing lamps 328, 348.

The lighting controller 30 receives an input from a lighting switch 36 which provides to the lighting controller 30 the user-desired status for the rear lamp clusters 32, 34. The lighting controller 30 also controls the operation of a number-plate lamp 38. The vehicle 10 further comprises an interior lamp 40 which is under the control of the lighting controller 30.

There is three-way communication between the security controller 12, the BCM 22 and the lighting controller 30.

The vehicle 10 further comprises an ambient light transducer 42 which communicates with the BCM 22, as does a vehicle power switch in the form of an ignition switch 44.

The BCM 22 causes the lighting controller 30 to emit a warning signal in response to actual or anticipated opening of one or more of the doors 20 and/or the boot-lid 26. Activation of the warning signal alerts the users of following traffic to the opening of at least one of the vehicle's closure members, so that they can take appropriate action to maintain a safe clearance/passing distance.

Actual opening is detected using the door-open circuit breakers 24 and/or the boot-lid circuit breaker 28. The door-open circuit breakers 24 operate equally effectively whether their associated door 20 is opened from the inside or from the outside of the vehicle 10. The interior lamp 40 is turned on when at least one of the door-open circuit breakers 24 indicates that a door 20 is being moved into the open position "O" and stays switched on so as to act as a courtesy light for the duration of a door-open time-out period. Under these circumstances, the warning signal is activated for the duration of that door-open time-out period.

In similar fashion to the door-open circuit breakers 24, the boot-lid circuit breaker 28 operates equally effectively whether the boot-lid latch 18 is opened by the transponder 14, by an external mechanical key or by an internally operated mechanism (not shown). The warning signal is activated by the opening of the boot-lid 26 and stays activated for the duration of a time-out equal to the door-open time-out period

As an added safety feature, unlatching the boot latch 18 does not activate the safety warning unless the vehicle 10 is substantially stationary, so as to avoid the risk of confusing the following traffic if the boot-lid 26 is not properly closed or is opened early by a mechanism mounted in the passenger compartment. If desired, this feature could be applied in a similar fashion to any activation of the warning signal.

Anticipated opening from the outside of the vehicle 10 is determined from receipt by the security controller 12 of an unlock signal from the transponder 14, for example by passive entry as a user approaches the vehicle 10. Under these circumstances, the warning signal is activated before a door 20 is opened and remains activated for the duration of a courtesy light time-out period in similar fashion to that discussed above. This provides an early warning to following traffic that someone may be about to open a door 20.

For base models which might not be provided with a transponder 14, it would be possible to activate the warning signal as soon as the vehicle is unlocked using, for example, a mechanical key and an associated door/lock detection switch.

Anticipated opening from the inside of the vehicle is determined by the BCM 22 when the vehicle 10 is turned "off", for example at the end of a journey. The end of a journey may, for example, be interpreted by BCM 22 from detection of the user moving the ignition key 44 into an "off' or "0" position after a period of vehicle use. Under these circumstances, so as to allow for a user who may not get out of the vehicle 10 soon after switching it off, it is considered preferable that the warning signal is not activated until a closure member 20, 26 is actually opened.

In addition, the warning signal is activated if inactive, or stays on if active, for a predetermined period after the vehicle 10 is locked. Vehicle locking is determined by the BCM 22 from the receipt by the security controller 12 of a "vehicle lock" signal from the transponder 14 or by the use of a mechanical key. This feature allows a user to put some distance between themselves and the vehicle 10 after locking and the time-out may conveniently be set in the order of 10 to 20 seconds.

The BCM 22 uses the ambient light transducer 42 to determine whether it is dark or whether there is reduced visibility. The warning signal is not activated except in darkness or poor visibility, so as to help preserve vehicle power.

The warning signal is implemented by illuminating, individually or in combination, one or more of the lamps 322, 324, 326, 328; 342, 344, 346, 348 in the rear lamp clusters 32, 34. The actual warning used may be influenced by manufacturer choice, but may be dictated by legislation or achieved through, for example, an agreed industry standard. To this end, the possible ways of implementing the warning signal outlined below are only examples, although it should be noted that they all rely on the implementation of the warning signal using one or more lamps of the rear lamp clusters 32, 34.

The warning signal is conveniently implemented by illuminating a pair of oppositely disposed rear lamps 322, 342; 324, 344; 326, 346; 328, 348 in co-operation, e.g. in a flashing mode. The flashing mode may be simultaneous (e.g. substantially in unison) or out of phase (e.g. substantially alternating). It may also prove desirable to mix simultaneous and out of phase flashing.

The warning signal might also be implemented using warning lamps from the same cluster 32, 34 so as, for example, to indicate on which side of the vehicle 10 a door 20 might be about to open. Other combinations are also possible, such as a tail lamp 322 from one side 32 combined with a reversing lamp 348 from the other side 34. The use of single lamps to provide the warning signal is also possible, e.g. use of a third/high level brake light (not shown).

In common with many other vehicles, the equipped vehicle 10 illuminates its number-plate lamp 38 in parallel with its tail lamps 322, 342. It is considered convenient, during activation of the warning signal at least, to separate the operation of the number-plate lamp 38 and the tail lamps 322, 342 such that the operational state of the number plate lamp 38 is unaffected by activation of the warning signal, i.e. the number-plate lamp 38 does not flash.

The activation of the warning signal can be over-ruled or cancelled by a user at any time by use of a usual/regular lighting switch, e.g. the exterior lighting switch 36. This ensures that the user does not lose ultimate control of operation of the lamps which are used to implement the warning signal.

The invention provides several advantages over existing systems and some of these advantages are outlined below.

A very good warning effect is provided with a reduced likelihood of the warning means being obscured by a user getting into or out of the vehicle 10.

The flashing of the rear lamps is more likely to be spotted than a permanently illuminated warning and has the added benefit of providing lower power consumption than permanently illuminated lamps.

The invention provides the facility, in some cases, to alert following traffic to the opening of a closure member 20, 26 before it is actually opened. This can warn them in advance of a user approaching and unlocking/opening the vehicle 10 or of a user who is about to open a door 20 to get out.

There are also enhanced safety benefits such as, for example, automatic activation by a key-card 14 of the warning signal on the approach of a user to the vehicle 10.

The invention reduces the need to fit warning lamps into the doors 20 themselves and a cost-saving is realised by the manufacturer which can be passed on to the customer. The savings arise from simplified door pressings and reduced wiring and weight.

The use of modern controllers 12, 22, 30 means that the invention can be implemented by re-programming existing systems as all the hardware needed is already available. This means that the invention can be implemented across a manufacturer's model range, even including the base models.
- 10: Vehicle
- 12: Security Controller
- 14: Portable Transponder
- 16: Door Latch
- 18: Boot-lid Latch
- 20: Door
- 22: Body Control Module (BCM) = GM
- 24: Door Circuit Breaker
- 26: Boot-lid/Tailgate/Rear Door
- 28: Boot-lid Circuit Breaker
- 30: Lighting Controller
- 32: Right-hand Rear Lamp Cluster
- 322: Right-hand Tail Lamp
- 324: Right-hand Indicator/Flasher Lamp
- 326: Right-hand Fog Lamp
- 328: Right-hand Reversing Lamp
- 34: Left-hand Rear Lamp Cluster
- 342: Left-hand Tail lamp
- 344: Left-hand Indicator/Flasher Lamp
- 346: Left-hand Fog lamp
- 348: Left-hand Reversing Lamp
- 36: Regular/Usual Light Switch
- 38: Number Plate Lamp
- 40: Interior Lamp
- 42: Ambient light Transducer
- 44: Ignition Switch

## Claims

1. A vehicle (10) including a warning means (22, 30) which is suitable for indicating to following traffic the opening of a closure member (20, 26) of the vehicle, the warning means (22, 30) being arranged on activation to emit a visible warning signal substantially rearwards of the vehicle (10), wherein said warning signal includes the illumination of one or more rear lamps (32, 34) of the vehicle (10).

2. A vehicle according to Claim 1, wherein said warning signal includes the flashing of at least a first said rear lamp (32, 34).

3. A vehicle according to Claim 2, wherein at least one further rear lamp (32, 34) is flashed simultaneously with said first rear lamp (32, 34).

4. A vehicle according to Claim 2, wherein at least one further rear lamp (32, 34) is flashed out of phase with said first rear lamp (32, 34).

5. A vehicle according to any preceding claim, wherein said warning signal is activated before a said closure member (20, 26) is opened.

6. A vehicle according to any preceding claim, wherein said warning signal is activated in response to the vehicle (10) being unlocked.

7. A vehicle according to any preceding claim, wherein said warning signal is activated in response to a communication between the vehicle (10) and a portable transponder (14).

8. A vehicle according to any preceding claim, wherein said warning signal is activated in response to a rear closure member (26) unlatch signal.

9. A vehicle according to any preceding claim, wherein said warning signal is activated by turning off a vehicle power switch (44).

10. A vehicle according to Claim 9, wherein said warning signal is only activated on turning off said power switch (44) if a said closure member (20, 26) is subsequently opened.

11. A vehicle according to any preceding claim, wherein said warning signal is activated in response to the vehicle (10) being locked.

12. A vehicle according to any preceding claim, wherein said warning signal remains activated for the duration of a predetermined time-out.

13. A vehicle according to any preceding claim, wherein said warning signal is over-ruled or cancelled by the use of a regular lighting switch (36) to control said one or more rear lamps (32, 34).

14. A vehicle according to any preceding claim, wherein said warning means (22, 30) is arranged to receive a signal from an ambient light transducer (42) and the warning signal is activated only under conditions of darkness or reduced visibility.

15. A vehicle according to any preceding claim, wherein said warning means (22, 30) is arranged to receive a signal from a vehicle speed transducer and said warning signal is activated only if the vehicle (10) is substantially at rest.
